Europäisches Patentamt

**(19)** European Patent Office

Office européen des brevets

(11) Publication number : **0 448 470 B1**

## EUROPEAN PATENT SPECIFICATION

(45) Date of publication of patent specification :
06.12.95 Bulletin 95/49

(51) Int. Cl.⁶ : **H04N 1/393**

(21) Application number : **91400758.8**

(22) Date of filing : **20.03.91**

(54) **Image processing apparatus and method with image reduction capability.**

(30) Priority : **20.03.90 JP 70072/90**

(43) Date of publication of application :
**25.09.91 Bulletin 91/39**

(45) Publication of the grant of the patent :
**06.12.95 Bulletin 95/49**

(84) Designated Contracting States :
**DE FR GB**

(56) References cited :
**EP-A- 0 066 371
US-A- 4 536 802
PATENT ABSTRACTS OF JAPAN, vol. 13, no.
298 (E-784)[3646], 10th July 1989; & JP-A-1 77
370
IBM TECHNICAL DISCLOSURE BULLETIN,
vol. 31, no. 11, April 1989, pages 57-59,
Armonk, NY, US; "Method for scaling gray
level image"**

(56) References cited :
**PATENT ABSTRACTS OF JAPAN, vol. 6, no.
182 (E-131)[1060], 18th September 1982; &
JP-A-57 97 271
PATENT ABSTRACTS OF JAPAN, vol. 13, no.
34 (E-708)[3382], 25th January 1989; & JP-A-63
233 670
PATENT ABSTRACTS OF JAPAN, vol. 11, no.
46 (E-479)[2493], 12th February 1987; & JP-
A-61 210 764**

(73) Proprietor : **FUJITSU LIMITED
1015, Kamikodanaka,
Nakahara-ku
Kawasaki-shi, Kanagawa 211 (JP)**

(72) Inventor : **Kamiyama, Akira
845-202, Futocho,
Kohoku-ku
Yokohama-shi, Kanagawa 222 (JP)**

(74) Representative : **Joly, Jean-Jacques et al
Cabinet Beau de Loménie
158, rue de l'Université
F-75340 Paris Cédex 07 (FR)**

## Description

Background of the Invention

1. Field of the Invention

This invention relates to an image processing apparatus which processes a binarized pixel image data of M pixels in the row or line scanning direction and N pixels in the column or paper feeding direction so as to reduce to binarized pixel image data of m pixels in the row direction and n pixels in the column direction.

2. Description of the Related Art

In an output apparatus such as a display apparatus which displays an image read by a scanner apparatus, facsimile apparatus, or printing apparatus such as an electrophotographic machine, an image may be reduced by curtailment of pixels in each line in a main scanning direction and curtailment of lines in a sub-scanning direction, because the display apparatus does not have a display area or the capability to print on a sheet of proper size, e.g., see Japanese Laid-open Patents JP-A-58125953 and JP-A-60132273 and United States Patent US-A-4,536,802. Special processing is required to output a reduced image onto the display screen or sheet. Similar processing is needed where a sending facsimile apparatus has an image reading unit which is capable of reading an image with high resolution and a receiving facsimile appparatus has a printing unit which can only output the image data using lower resolution than the sending facsimile apparatus.

Recently, it has been desired to output a half-tone image using multi-value data stored for each pixel. Therefore, in reducing the image data to a small size, it is first necessary to store the multi-value data read by an image reading unit to an image memory. Then the number of multi-value pixels is reduced by an image reducing circuit. Finally, the multi-value data for the remaining pixels are output by an outputting apparatus. As will be understood from the above explanation, because the image data is multi-valued, such as usually 16-bits per pixel, the cost of the image memory and image reducing circuit becomes high.

Summary of the Invention

Accordingly, it is an object of the present invention to provide a low cost image processing apparatus capable of reducing half-tone images.

It is also an object of the invention to provide an image processing apparatus capable of providing reduced images free of visible defects caused by elimination of pixels in the lines of the original image.

These objects are achieved by an image processing apparatus as defined in claim 1.

Other objects of the present invention will be apparent from the following explanation of the invention with reference to the accompanying drawings wherein like reference numerals refer to like parts.

BRIEF DESCRIPTION OF THE DRAWINGS

The accompanying drawings, which are incorporated in and constitute a part of the specification, illustrate embodiments of the invention and, together with the description, serve to explain the principles of the invention.

FIG. 1 is a block diagram of a facsimile apparatus such as the image processing apparatus of the invention;

FIG. 2 is a block diagram of the image reading unit in FIG. 1;

FIG. 3 is a block diagram of the printing unit in FIG. 1;

FIG. 4 is a block diagram of the image reducing unit in FIG. 1;

FIGS. 5A-5C are binary representations illustrating curtailment patterns;

FIG. 6 is a diagram of binarized pixel data which has not been curtailed;

FIG. 7 is a diagram of binarized pixel data which has been curtailed using the invention; and

FIG. 8 is a diagram of binarized pixel data which is curtailed using a prior art method.

DESCRIPTION OF THE PREFERRED EMBODIMENT

Reference will now be made in detail to the present preferred embodiment of the invention, an example of which is illustrated in the accompanying drawings.

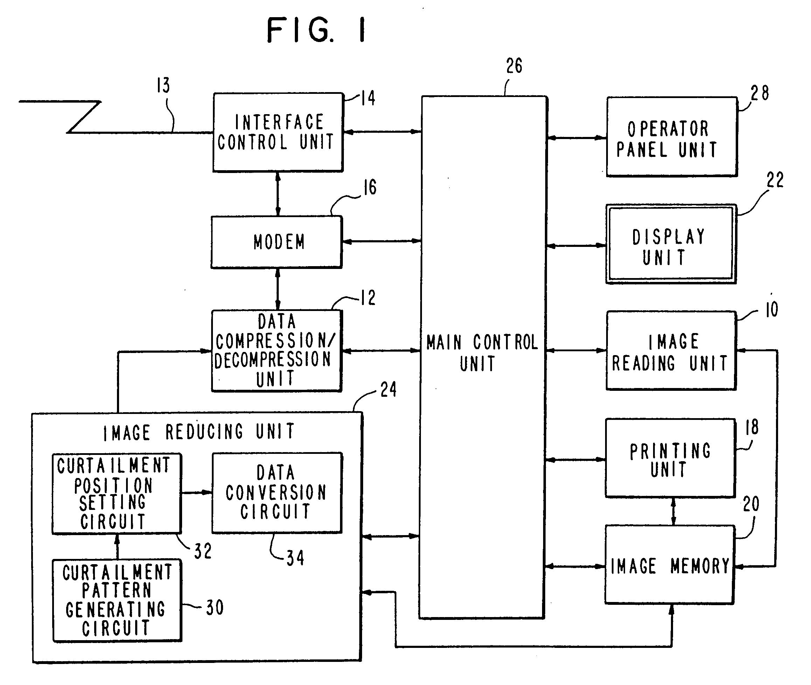

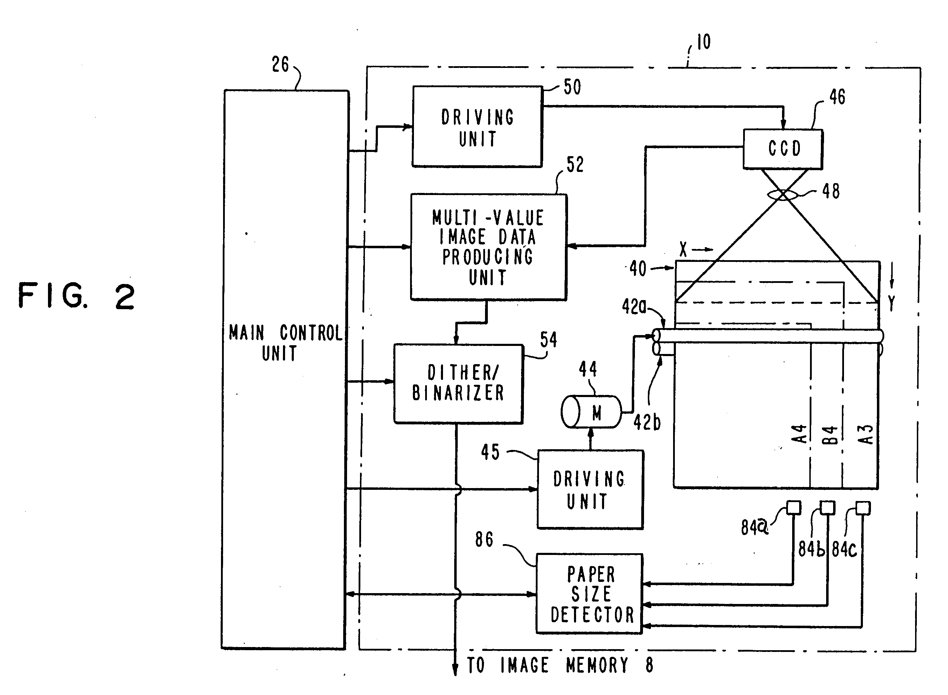

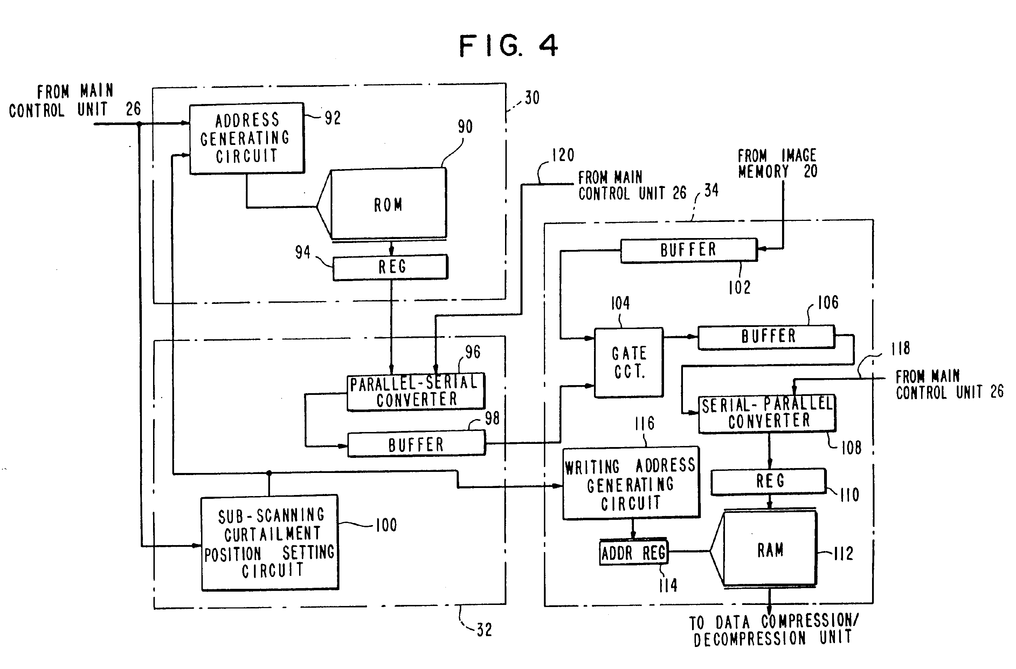

FIG. 1 is a block diagram of a facsimile apparatus including an image processing apparatus according to the present invention. The facsimile apparatus includes an image reading unit 10, illustrated in more detail in FIG. 2, for reading image data from an original document. A data compression/decompression unit 12 compresses the image data read by the image reading unit 10 and decompresses image data received from another facsimile apparatus (not shown) connected by a phone line 13. The phone line 13 is connected to an interface control unit 14 in the facsimile apparatus illustrated in Fig. 1. A modem 16 connected to the interface control unit 14 transmits and receives over the phone line 13. A printing unit 18, described in more detail in FIG. 2, is provided for printing out image data onto a recording sheet, such as the image data received through the interface control unit 14, the modem 16, and the data compression/decompression unit 12 and previously stored in an image memory 20. The image data stored in the image memory 20 may be displayed on a display unit 22. An image reducing unit 24 is provided for reducing the image data. A main control unit 26 controls the operation of the facsimile apparatus illustrated in FIG. 1 in response to instructions received from an operator panel unit 28. The image reducing unit 24 includes a curtailment pattern generating circuit 30, a curtailment position setting circuit 32, and a data conversion circuit 34. The operation of the circuits in the image reducing unit 24 will be described below with reference to FIG. 4.

FIG. 2 is a block diagram of the detailed structure of the image reading unit 10. A document 40 is fed along a subscanning direction, indicated by arrow Y in FIG. 2, by rollers 42a and 42b. A motor 44 is controlled via a driving unit 45 by main control unit 26 to rotate the rollers 42. An image on the document 40 is read by a charge coupled device (CCD) unit 46 using a focusing lens 48. The CCD unit 46 is driven by a driving unit 50 which is controlled by the main control unit 26. The CCD unit 46 includes about 5000 or more CCD devices which are arranged in a main scanning direction, indicated by arrow X in FIG.2, to read an A3 size document with a resolution of 400 dpi. The CCD unit 46 outputs an output signal, in accordance with the density of an image on the document 40, to a multi-value image data producing unit 52. The multi-value image data producing unit 52 produces 16 levels per pixel by comparing the output signal from the CCD unit 46 with predetermined multi-threshold levels and then the multi-value image data is output to a dither/binarizer 54. Namely, where an image on the document 40 includes a half-tone image, the output signal from the CCD unit 46 supplies multi-level or analog values continuously varying from a minimum level to a maximum level.

The dither/binarizer 54 converts the multi-value image data from the image data producing unit 52 to binarized pixel data using a dither method, etc. The binarized pixel data is stored in the image memory 20 under control of the main control unit 26. This procedure is used because the output apparatus, such as an electrophotographic or thermal printer which is typically used for printing in a facsimile apparatus, is unable to express a half-tone by one pixel. Hence, the half-tone image is converted to binarized pixel data by the dither method, etc.

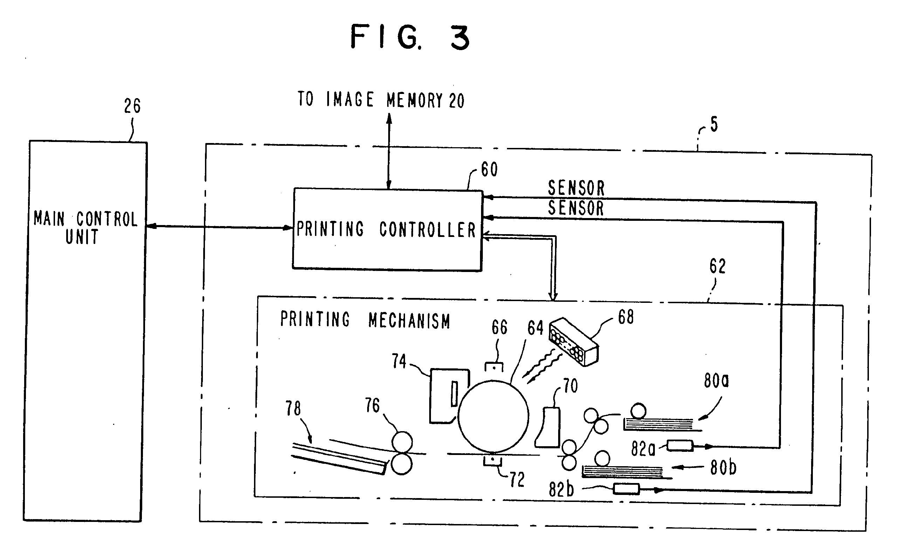

FIG. 3 is a block diagram illustrating the detailed structure of the printing unit 18. In FIG. 3, the printing unit 18 includes a printing controller 60 and a printing mechanism 62. Under control of the printing controller 60, the printing mechanism 62 prints out the binarized image data stored in the image memory 20 in accordance with instructions from the main control unit 26. The printing mechanism 62 may be an electrophotographic type printer which includes a photoconductive drum 64, a precharger 66, an exposure unit 68, a developing unit 70, a transfer charger 72, a cleaner 74, a heat roller type fuser 76, a stacker 78, two hoppers 80a and 80b for different size paper and two paper size detectors 82a and 82b which detect the size of the paper which is placed in each hopper 80a and 80b. The exposure unit 68 may be an LED array type, as illustrated in FIG. 3, or a mirror scanning type, or any conventional exposure unit. Detection signals of the paper size detectors 82a and 82b are output to the printing controller 60.

In FIGs. 1-3, a document 40 is first set in a reading position in the image reading unit 10. The size of the document 40 is detected by the photosensitive sensors 84a to 84c and a paper size detector 86 sends the paper size to the main control unit 26. The main control unit 26 then controls the image reading unit 10 to read the document 40 and stores the binarized pixel data in the image memory 20. Namely, image data to be reduced is stored to the image memory 20 as a binarized pixel data so that cost of the image memory 20 is minimal. Then the main control unit 26 proceeds with the sending procedure to another (receiving) facsimile apparatus. After the main control unit 26 receives information from the receiving facsimile apparatus indicating the size of the recording sheet, resolution of the print unit, etc., the main control unit 26 determines a curtailment rate in accordance with the size of document reported by the paper size detector 86 and the recording sheet size or the resolution from the receiving facsimile apparatus.

The receiving facsimile apparatus determines the size of the recording sheet using a paper size detector like detectors 82a, 82b shown in FIG. 3, if the receiving facsimile apparatus has the same printing unit shown in FIG. 3. The printing controller 60 transmits the size of the recording sheet which is detected by the sensors 82a and 82b to the main control unit in the receiving facsimile apparatus. Then the main control unit in the receiving facsimile apparatus sends the size of the recording sheet to the sending facsimile apparatus.

If the size of the recording sheet is smaller than the size of the document 40, for example, if the recording sheet is A4 size paper (21.0 cm by 29.7 cm) and the document 40 is B4 size paper (36.4 cm by 25.7 cm), the main control unit 26 in the sending facsimile apparatus calculates a curtailment rate and operates the image reducing unit 24 in compliance with the curtailment rate. Thereby, the binarized pixel data to be sent from the image memory 20, which is B4 size image.data, is reduced to A4 size binarized pixel data by the image reducing unit 24. The, e.g., A4 size pixel data is compressed by the data compression/decompression unit 12 and is transmitted to the receiving facsimile apparatus through the modem 16, the interface control unit 14, and the phone line 13 under control of the main control unit 26. Finally, the binarized pixel data is printed out by the printing unit in the receiving facsimile apparatus.

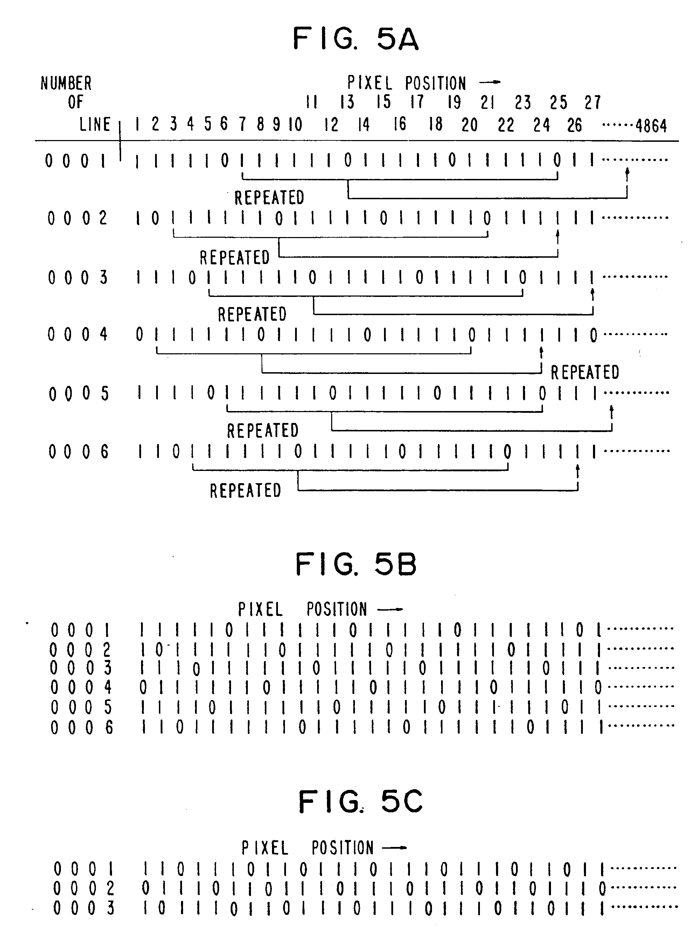

Details of the image reducing unit 24 will be explained below with reference to FIG. 4. In FIG. 4, the curtailment pattern generating circuit 30 comprises a read only memory (ROM) 90 which stores a curtailment pattern as shown in FIGS. 5A-5C, an address generating circuit 92 and a data register 94. FIG. 5A shows a curtailment pattern for reducing A3 size pixel data to B4 size pixel data, FIG. 5B is a pattern for converting B4 to A4, and FIG. 5C is a pattern for converting A3 to A4. According to the Consultative Committee for International Telephone and Telegraph (CCITT), the number of pixels in the main scanning direction is show in the table below.

| Resolution | ISO A4 | ISO B4 | ISO A3 |
|---|---|---|---|
| 200 DPI | 1728 dot | 2048 dot | 2432 dot |
| 240 DPI | 2074 dot | 2458 dot | 2918 dot |
| 300 DPI | 2592 dot | 3072 dot | 3648 dot |
| 400 DPI | 3456 dot | 4096 dot | 4864 dot |

Therefore, where A3 size binarized pixel data is reduced to B4 size binarized pixel data, the curtailment rate is 16/19; B4 to A4 is 27/32; and A3 to A4 is 27/38. In the 16/19 rate, because 19 pixels are reduced to 16 pixels, one pixel is eliminated for each 6.33 pixels. Namely, the sixth pixel, the thirteenth pixel (seventh pixel after the sixth pixel), the nineteenth pixel (sixth pixel after the thirteenth pixel) are eliminated in the 19 pixels and these curtailment positions are set to be repeated for each line of the main scanning direction. This is a 6-7-6 interval. Similar to the 16/19 rate, the curtailment positions in the 27/32 rate are the sixth pixel, the thirteenth pixel (seventh pixel after the sixth pixel), the nineteenth pixel (sixth pixel after the thirteenth pixel, the twenty-sixth pixel (seventh pixel after the nineteenth pixel), and the thirty-second pixel (sixth pixel after the twenty-sixth pixel) in the thirty-two pixels, and each curtailment position is set to be repeated in each line. This is a 6-7-6-7-6 interval. Also, the curtailment positions in the 27/38 rate are the third pixel, the seventh pixel (fourth pixel after the third pixel), the tenth pixel, the fourteenth pixel, the seventeenth pixel, twentieth pixel, the twenty-fourth pixel, the twenty-seventh pixel, the thirty-first pixel, the thirty-fifth pixel, and the thirty-eighth pixel in the thirty-eight pixels, and each curtailment position is set to be repeated in each line. This is a 3-4-3-4-3-4-3-4-3-4-3 interval.

In FIGs. 5A-5C, a data "0" in a pixel position indicates a curtailment position and a data "1" in a pixel indicates a writing or noncurtailment position. As will be apparent from FIGS. 5A to 5C, in each line of the curtailment pattern, the curtailment positions on adjacent lines are different. Namely, in FIGS. 5A and 5B, the first curtailment position occurs at six different pixels in the six lines of the curtailment pattern. Thereby, all of the curtailment positions differ in the lines in the curtailment pattern. Similarly, in FIG. 5C, each line of the curtailment pattern has a different first curtailment position within the first three pixels. Thereby, all of the curtailment positions are different on the three lines in the curtailment pattern.

FIGs. 5A-5C illustrate curtailment where resolution is the same and the size of the document is reduced. Where resolution is different and the size of the document is same, the curtailment rate is calculated based upon resolution before and after curtailment, for example, 400 dpi to 300 dpi is 3/4. Furthermore, curtailment lines in the subscanning direction which is the paper feeding direction are decided in the same manner as curtailment in the main scanning direction and thus, lines are reduced in a manner similar to that described above.

The curtailment position setting circuit 32 comprises a parallel/serial conversion circuit 96, a buffer memory 98 such as a FIFO memory, and a subscanning curtailment position setting circuit 100. The data conversion circuit 34 comprises a buffer memory 102 such as a FIFO memory, a gate circuit 104 which may be a latch circuit, a buffer memory 106 such as a FIFO memory, a serial/parallel conversion circuit 108, a data register 110, a random access memory (RAM) 112, an address register 114, and a writing address generating circuit 116.

The operation of FIG. 4 is explained with reference to FIGs. 5-8. FIGs. 5-8 illustrate a curtailment rate of 16/19 in which A3 size paper is reduced to B4 size. First, binarized pixel data which is stored in the image memory 20 is read out arid then stored in the buffer memory 102. The main control unit 26 outputs a select signal which indicates a curtailment rate to the curtailment pattern generating circuit 30 and the curtailment position setting circuit 32. The address generating circuit 92 in the curtailment pattern generating circuit 30 generates an address to read out a curtailment pattern, for the curtailment rate 16/19 as shown in FIG. 5A, from the ROM 90. Curtailment pattern data, for example, the 8 bits of data, "11111011", which are the first 8 bits of line number 1 in FIG. 5A, are output from ROM 90 to the data register 94. The 8 bits of curtailment pattern data received from ROM 90 are converted to serial data by the parallel/serial conversion circuit 96 in accordance with a converting signal from the main control unit 26. The serial data are sent to the buffer memory 98 under control of the main control unit 26 in synchronization with reading of the image data from the image memory 20.

Output signals from the buffer memories 98 and 102 are input to the latch circuit 104. If the output signal of the buffer memory 90 is a "1", the latch circuit 104 outputs the input signal from the buffer memory 102 to the buffer memory 106. On the other hand, if the output signal of the buffer memory 98 is a "0", the latch circuit 104 inhibits output of the signal from the buffer memory 102 to the buffer memory 106.

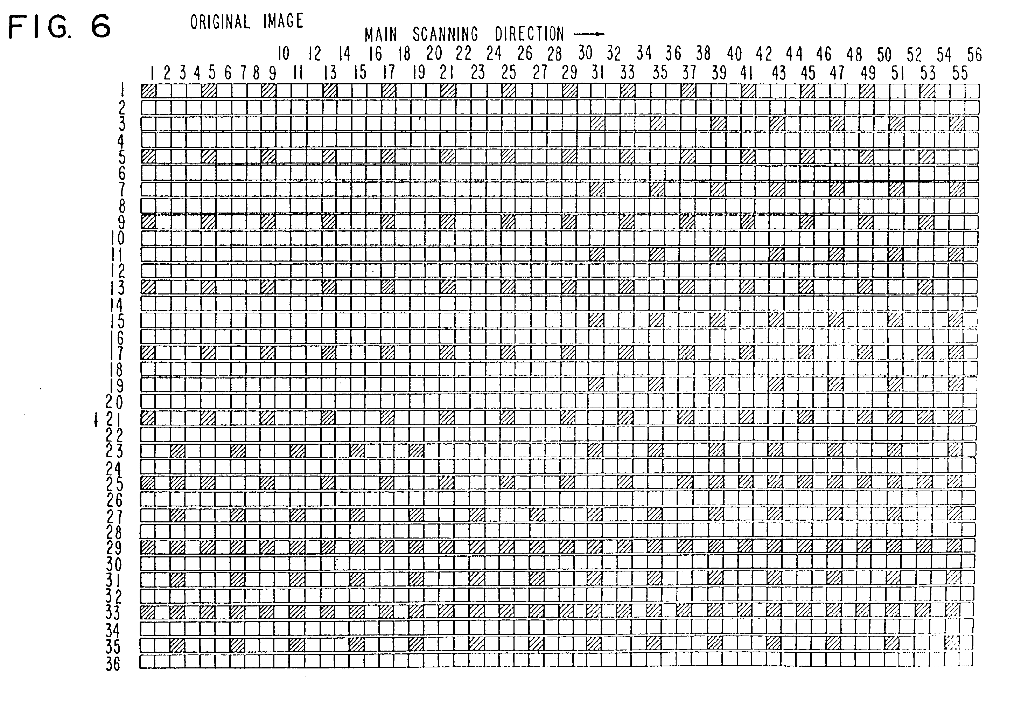

Therefore, the first five binarized pixel data, "10001", in line number 1 in FIG. 6 will be stored in the buffer memory 106. Then the pixel data, "0", of sixth,pixel position in line number 1 in FIG. 6 is not stored in the buffer memory 106 and the line length is thereby reduced, because the sixth pixel position in buffer memory 98 is "0". Furthermore, the seventh and eighth pixel data in line number 1 in FIG. 6 are stored in the buffer memory 106 because the output signals of the seventh and eighth positions from the buffer memory 98 are "1".

In the same manner as above, as the output signals from the buffer memory 98 are supplied to the latch circuit 104, the output signals of the buffer memory 102 are supplied to the buffer memory 106 or are inhibited by the latch circuit 104 in accordance with the pattern data ("1" or "0") from the buffer memory 98. Thereby, for example, the data "100010001" which are the first nine pixel data in line number 1 in FIG. 6 are converted to the data "10001001".

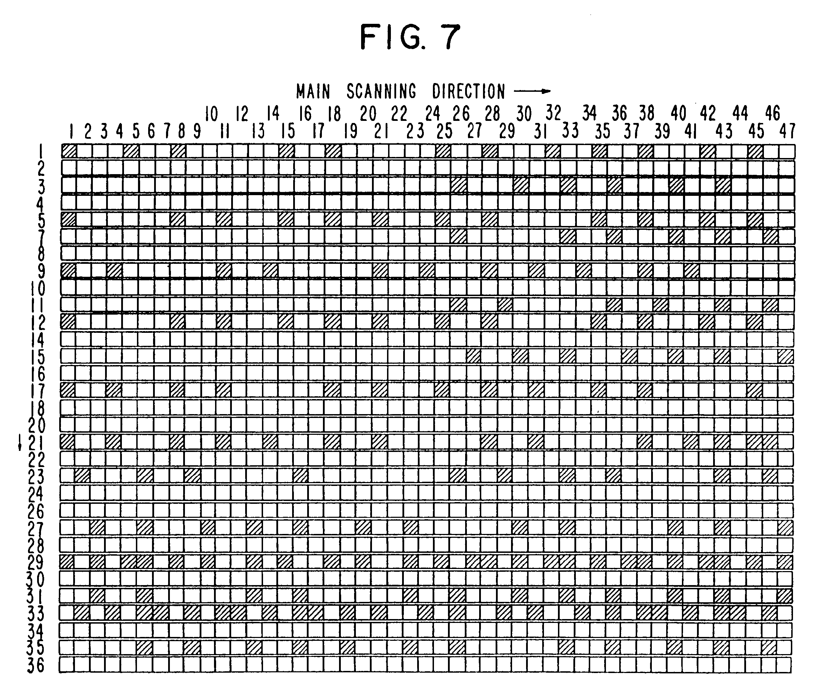

The serial data from buffer 106 are then converted to parallel data under control of a converting signal from the main control unit 26 after serial data of 8 bits have been input to the serial/parallel conversion circuit 108. Here, if the buffer memory 106 can store at least nine pixels of data, the converting signal 118 controlling the serial/parallel conversion circuit 108 may be supplied by the main control unit 26 one cycle later than the converting signal 120 controlling the parallel/serial conversion circuit 96. Then the 8 bits of parallel data is stored in the RAM 112 (see the first 8 bits of line number 1 in FIG. 7) at an address which is set in the address register 114 by the writing address generating circuit 116. The writing address generating circuit 116 generates an address in compliance with the converting signal 118 after a necessary time has passed to process the operation of the serial/parallel conversion circuit 108.

Prior to finishing the reducing process for line number 1 in the document 40, the address generating circuit 92 generates an address to read out the curtailment pattern for the line number 2. The same curtailment process described above is used for lines 2-5. However, the entire-sixth line of the binarized pixel data in the image memory 20 is deleted, under the control of the subscanning curtailment position setting circuit 100, which reduces the number of lines in the document 40 according to the curtailment rate. Thus, the subscanning curtailment position setting circuit 100 deletes the thirteenth line (seven lines past the sixth line), nineteenth line (six lines past the thirteenth line), the twenty-fifth line (six lines past the nineteenth line), etc. This is repeated with a 6-7-6 interval for the subscanning direction in accordance with the curtailment rate of 16/19. Furthermore, where the curtailment rate is 27/32, a 6-7-6-7-6 interval is used and where the curtailment rate is 27/38, a 3-4-3-4-3-4-3-4-3-4-3 interval is used.

Accordingly, the address generating circuit 92 does not increment the address to read out a curtailment pattern for, e.g., the sixth line of the document 40 in compliance with a curtailment signal from the subscanning curtailment position setting circuit 100 and therefore, the ROM 90 outputs the fifth line of the curtailment pattern, even though the sixth line of the binarized pixel data in the image memory 20 is output to the buffer memory 102. After processing the sixth line of the document 40 in this manner, the address generating circuit 92 increments the address and then the sixth line of the curtailment pattern is read out from the ROM 90 to apply for the seventh line of the binarized pixel image data read out from the image memory 20.

Similarly, the writing address generating circuit 116 does not increment the address register 114 to write to the RAM 112 in accordance with the curtailment signal from circuit 100. Thus, when writing data to the RAM 112 for a deleted line, e.g., line 6 of document 40, the data is overwritten in the RAM 112 so as to be added to data which has already been stored in the same address of the RAM 112 for the preceding line, e.g., line 5.

In the same manner as above, after writing of the sixth line of the binarized pixel data, the writing address generating circuit 116 increments the address register 114 to store the seventh line of the binarized pixel data at the address of the sixth line of the RAM 112.

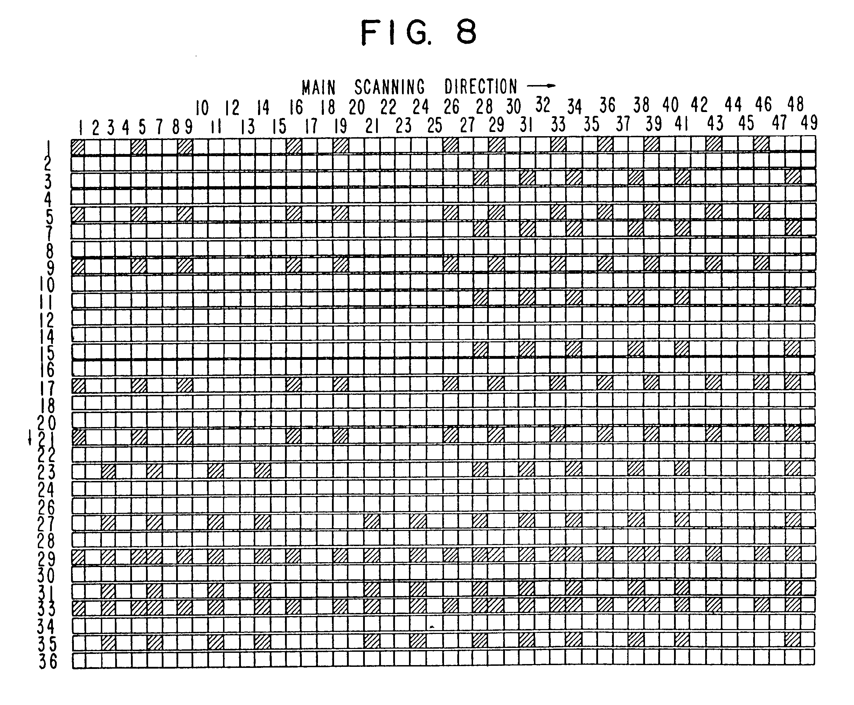

For example, the binarized pixel data shown in FIG. 6 will be reduced by the reducing process of the present invention so that binarized pixels are reduced at the predetermined positions of the sixth, thirteenth, nineteenth, twenty-fifth, forty-fourth,... pixel in each line. In the prior art process, periodical unevenness occurs in the reduced binarized pixel data as shown in FIG. 8. Namely, as shown in FIG. 8, a gap between two black pixels may be wider than a gap before curtailment, for example, the gap between the eighth and fifteenth pixels on line 1 is extended from three white pixels (see FIG. 6) to six white pixels (see FIG. 8) or a gap between the forty-second and forty-fifth pixels on line 29 is extended from one white pixel (see FIG. 6) to two white pixels (see FIG. 8). These gaps also occur on other lines. These gaps are therefore seen by a viewer as a continuing white line prolonging along the sub-scanning direction in Fig. 8.

However, in this invention, when binarized pixel data is reduced, the problem described above does not occur, because the curtailment position is changed between adjacent lines. Namely, as shown in FIG. 7, in lines 5 and 9, black pixels occur between the eighth pixel position and the fifteenth pixel position. Thereby, a viewer of the image does not sense the existence of a gap at those positions. As will be apparent from FIGs. 7 and 8, other gaps occurring along the subscanning direction in FIG. 8 will not be sensed by a viewer of FIG.7 as gaps. Also, the thirteenth line which is eliminated in the prior art, as illustrated in FIG. 8, appears in FIG. 7 by overwriting the twelfth line so the viewer does not sense the existence of a gap between the ninth line and the seventeenth line.

## Claims

1. An image processing apparatus having image reducing means (24) for reducing a binarized image data of M pixels per line in a first direction and N lines in a second direction to binarized image data of m pixels per line in the first direction and n lines in the second direction, where $M > m$ and $N > n$, said apparatus comprising:

   designating means (30, 32) for designating curtailment pixel positions in each line of the binarized image data and curtailment line positions in the binarized image data, in accordance with an image reducing rate, and

   curtailment means (34) for eliminating pixels from each line at the designated curtailment pixel positions and for eliminating lines at the designated curtailment line positions,

   characterized in that the designating means are adapted to shift the curtailment pixel positions between adjacent lines in accordance with a predetermined sequence.

2. An image processing apparatus as claimed in claim 1, further comprising converting means (52, 54) for converting an image from multi-value image data per pixel to binarized image data per pixel, with M pixels per line in the first direction and N lines in the second direction.

3. An image processing apparatus as claimed in claims 1 or 2, further comprising deciding means (26) for deciding the image reducing rate in dependence upon image sizes of the binarized image data before and after curtailment.

4. An image processing apparatus as claimed in any one of claims 1 to 3, wherein said designating means comprises:

   a memory (90), operatively connected to said curtailment means (34), storing a curtailment pattern for controlling curtailment of each line to be reduced by said curtailment means, and

   reading means (26, 92, 100) for reading the curtailment pattern from said memory in accordance with the image reducing rate.

5. An image processing apparatus as claimed in claim 4, wherein said memory (90) stores a curtailment pattern, for J lines, where J is less than N, and

   wherein said reading means (26, 92, 100) repeatedly reads the curtailment pattern for each new group of J lines.

6. An image processing apparatus as claimed in claim 5, wherein said reading means (26, 92, 100) pauses reading of the curtailment pattern when said designating means (30, 32) designates a curtailment line position.

7. An image processing apparatus as claimed in any one of claims 1 to 6, further comprising:
   outputting means (14) for outputting the curtailed pixel data produced by said curtailment means.

8. An image processing apparatus as claimed in any one of claims 1 to 7, wherein said curtailment means (34) are designed to curtail lines by overwriting an adjacent line for each of the lines to be curtailed.

9. An image processing apparatus as claimed in any one of claims 1 to 8, further comprising document reading means (10) for reading a sheet of a document to produce the binarized pixel data with M pixels in the first direction and N lines in the second direction.

10. An image processing apparatus as claimed in claim 9, wherein said document reading means (10) comprises conversion means (52, 54) for converting an image from multi-value image data per pixel to the binarized image data per pixel with M pixels in the first direction and N lines in the second direction.

11. An image processing apparatus as claimed in any of one claims 1 to 10, further comprising a memory (20), operatively connected to said curtailment means (34), to store binarized pixel data with M pixels per line in the first direction and N lines in the second direction.

12. An image processing apparatus as claimed in any one of claims 1 to 11, further comprising means (26) for supplying the image reducing rate to said designating means (24).

13. An image processing apparatus as claimed in any one of claims 1 to 12, further comprising transmitting means (14, 16) for transmitting the reduced image data to another image processing apparatus.

14. An image processing apparatus as claimed in any one of claims 1 to 12 wherein said apparatus is connectable to another image processing apparatus, and further comprises :
   transmitting means (14, 16) for transmitting the reduced binarized image data to the other image processing apparatus; and
   receiving means (14) for receiving processed binarized image data from the other image processing apparatus.

15. An image processing apparatus as claimed in claim 14,
   wherein said receiving means (14) are provided for further receiving an output document size from the other image processing apparatus;
   wherein said document reading means (10) are further provided for producing an input document size,
   wherein said designating means (30, 32) has means for storing groups of pixel patterns selectable as a function of the image reducing rate, and
   wherein said image processing apparatus further comprises means for calculating the image reducing rate from the input and output document sizes.

16. An image processing method, comprising the steps of :
   (a) supplying binarized pixel data with M pixels per line in a first direction by N lines in a second direction;
   (b) designating curtailment pixel positions in each line of pixel data and curtailment line positions in accordance with an image reducing rate;
   (c) curtailing the binarized pixel data supplied in step (a) to reduce same from M pixels per line and N lines to curtailed binarized pixel data with m pixels per line in the first direction and n lines in the second direction in dependence with the curtailment pixel positions and curtailment line positions, where M > m and N > n; and
   (d) outputting the curtailed binarized pixel data obtained as a result of step (c);
   characterized in that the designation of curtailment positions in step (b) is made to cause the curtailment pixel positions be shifted between adjacent lines in accordance with a predetermined sequence.

17. An image processing method as claimed in claim 16, wherein curtailment of lines is made by overwriting an adjacent line for each of the lines to be curtailed.

**18.** An image processing method as claimed in any one of claims 16 and 17,

further comprising the steps of incrementing an output line of the curtailed binarized pixel data corresponding to an input line of the binarized pixel data, and

inhibiting said output line incrementing when said designating in step (b) indicates the corresponding input line is to be curtailed, the pixels on the input line being written onto the output line corresponding to an immediately preceding input line.

**Patentansprüche**

**1.** Bildverarbeitungsvorrichtung mit Bildverkleinerungseinrichtungen (24) zum Reduzieren von binärisierten Bilddaten von M Pixeln pro Zeile in einer ersten Richtung und N Zeilen in einer zweiten Richtung auf binärisierte Bilddaten von m Pixeln pro Zeile in der ersten Richtung und n Zeilen in der zweiten Richtung, mit M > m und N > n, wobei die Vorrichtung enthält:

Bestimmungseinrichtungen (30, 32) zum Bestimmen von Kürzungspixelpositionen in jeder Zeile der binärisierten Bilddaten und Kürzungszeilenpositionen in den binärisierten Bilddaten gemäß einer Bildverkleinerungsrate, und

Kürzungseinrichtungen (34) zum Eliminieren von Pixeln jeder Zeile an den bestimmten Kürzungspixelpositionen und zum Eliminieren von Zeilen an den bestimmten Kürzungszeilenpositionen,

dadurch gekennzeichnet, daß die Bestimmungseinrichtungen ausgelegt sind, die Kürzungspixelpositionen zwischen benachbarten Zeilen gemäß einer vorbestimmten Sequenz zu verschieben.

**2.** Bildverarbeitungsvorrichtung nach Anspruch 1, ferner enthaltend Konvertierungseinrichtungen (52, 54) zum Konvertieren eines Bildes von Mehrwertbilddaten pro Pixel in binärisierte Bilddaten pro Pixel mit M Pixeln pro Zeile in der ersten Richtung und N Zeilen in der zweiten Richtung.

**3.** Bildverarbeitungsvorrichtung nach Anspruch 1 oder 2, ferner enthaltend Festlegeeinrichtungen (26) zum Festlegen der Bildverkleinerungsrate in Abhängigkeit von Bildgrößen der binärisierten Bilddaten vor und nach der Kürzung.

**4.** Bildverarbeitungsvorrichtung nach einem der Ansprüche 1 bis 3, bei der die Bestimmungseinrichtungen enthalten:

einen betriebsmäßig mit den Kürzungseinrichtungen (34) verbundenen Speicher (90), der ein Kürzungsmuster zum Steuern der Kürzung jeder zu reduzierenden Zeile durch die Kürzungseinrichtungen speichert, und

Leseeinrichtungen (26, 92, 100) zum Lesen des Kürzungsmusters aus dem Speicher gemäß der Bildverkleinerungsrate.

**5.** Bildverarbeitungsvorrichtung nach Anspruch 4, bei der der Speicher ein Kürzungsmuster für J Zeilen speichert, wobei J kleiner als N ist, und

wobei die Leseeinrichtungen (26, 92, 100) das Kürzungsmuster für jede neue Gruppe von J Zeilen wiederholt ausliest.

**6.** Bildverarbeitungsvorrichtung nach Anspruch 5, bei der die Leseeinrichtungen (26, 92, 100) das Lesen des Kürzungsmusters unterbrechen, wenn die Bestimmungseinrichtungen (30, 32) eine Kürzungszeilenposition bestimmen.

**7.** Bildverarbeitungsvorrichtung nach einem der Ansprüche 1 bis 6, ferner enthaltend:

Ausgabeeinrichtungen (14) zum Ausgeben der durch die Kürzungseinrichtungen erzeugten gekürzten Pixeldaten.

**8.** Bildverarbeitungsvorrichtung nach einem der Ansprüche 1 bis 7, bei der die Kürzungseinrichtungen (34) ausgelegt sind, Zeilen durch Überschreiben einer benachbarten Zeile für jede der Zeilen zu kürzen, die gekürzt werden sollen.

**9.** Bildverarbeitungsvorrichtung nach einem der Ansprüche 1 bis 8, ferner enthaltend Dokumentenleseeinrichtungen (10) zum Lesen eines Dokumentenblattes, um die binärisierten Pixeldaten mit M Pixeln in der ersten Richtung und N Zeilen in der zweiten Richtung zu erzeugen.

10. Bildverarbeitungsvorrichtung nach Anspruch 9, bei der die Dokumentenleseeinrichtungen (10) Konvertierungseinrichtungen (52, 54) zum Konvertieren eines Bildes von Mehrwertbilddaten pro Pixel in die binärisierten Bilddaten pro Pixel mit M Pixeln in der ersten Richtung und N Zeilen in der zweiten Richtung enthalten.

11. Bildverarbeitungsvorrichtung nach einem der Ansprüche 1 bis 10, ferner enthaltend einen operativ mit den Kürzungseinrichtungen (34) verbundenen Speicher (20) zum Speichern von binärisierten Pixeldaten mit M Pixeln pro Zeile in der ersten Richtung und N Zeilen in der zweiten Richtung.

12. Bildverarbeitungsvorrichtung nach einem der Ansprüche 1 bis 11, ferner enthaltend Einrichtungen (26) zum Zuführen der Bildverkleinerungsrate zu den Bestimmungseinrichtungen (24).

13. Bildverarbeitungsvorrichtung nach einem der Ansprüche 1 bis 12, ferner enthaltend Übertragungseinrichtungen (14, 16) zum Übertragen der verkleinerten Bilddaten an eine weitere Bildverarbeitungsvorrichtung.

14. Bildverarbeitungsvorrichtung nach einem der Ansprüche 1 bis 12, bei der die Vorrichtung an eine weitere Bildverarbeitungsvorrichtung anschließbar ist und ferner enthält:
    Übertragungseinrichtungen (14, 16) zum Übertragen der reduzierten binärisierten Bilddaten zur anderen Bildverarbeitungsvorrichtung, und
    Empfangseinrichtungen (14) zum Empfangen verarbeiteter binärisierter Bilddaten von der anderen Bildverarbeitungsvorrichtung.

15. Bildverarbeitungsvorrichtung nach Anspruch 14,
    bei der die Empfangseinrichtungen (14) zum weiterhin Empfangen einer Ausgabedokumentengröße von der anderen Bildverarbeitungsvorrichtung vorgesehen sind,
    bei der die Dokumentenleseeinrichtungen (10) ferner zur Erzeugung einer Eingabedokumentengröße vorgesehen sind,
    bei der die Bestimmungseinrichtungen (30, 32) Einrichtungen zum Speichern von Gruppen von Pixelmustern haben, die als eine Funktion der Bildverkleinerungsrate auswählbar sind, und
    bei der die Bildverarbeitungsvorrichtung ferner Einrichtungen zum Berechnen der Bildverkleinerungsrate aus den Eingabe- und Ausgabedokumentengrößen enthält.

16. Bildverarbeitungsverfahren, enthaltend die Schritte:
    (a) Zuführen binärisierter Pixeldaten mit M Pixeln pro Zeile in einer ersten Richtung mal N Zeilen in einer zweiten Richtung,
    (b) Bestimmen von Kürzungspixelpositionen in jeder Zeile von Pixeldaten und Kürzungszeilenpositionen gemäß einer Bildverkleinerungsrate,
    (c) Kürzen der im Schritt (a) zugeführten binärisierten Pixeldaten, um selbige von M Pixeln pro Zeile und N Zeilen auf gekürzte binärisierte Pixeldaten mit m Pixeln pro Zeile in der ersten Richtung und n Zeilen in der zweiten Richtung in Abhängigkeit von den Kürzungspixelpositionen und Kürzungszeilenpositionen zu reduzieren, mit M > m und N > n, und
    (d) Ausgeben der als ein Ergebnis des Schrittes (c) erhaltenen gekürzten binärisierten Pixeldaten,
        dadurch gekennzeichnet, daß die Bestimmung der Kürzungspositionen im Schritt (b) durchgeführt wird, um eine Verschiebung der Kürzungspixelpositionen zwischen benachbarten Zeilen gemäß einer vorbestimmten Sequenz zu veranlassen.

17. Bildverarbeitungsverfahren nach Anspruch 16, bei dem eine Kürzung von Zeilen durch Überschreiben einer benachbarten Zeile für jede der zu kürzenden Zeilen durchgeführt wird.

18. Bildverarbeitungsverfahren nach einem der Ansprüche 16 und 17,
    ferner enthaltend die Schritte des Inkrementierens einer Ausgabezeile der gekürzten binärisierten Pixeldaten entsprechend einer Eingabezeile der binärisierten Pixeldaten, und
    Unterbinden der Ausgabezeileninkrementierung, wenn die Bestimmung im Schritt (b) anzeigt daß die entsprechende Eingabelinie zu kürzen ist, wobei die Pixel an der Eingabezeile entsprechend einer unmittelbar vorhergehenden Eingabezeile auf die Ausgabezeile geschrieben werden.

**Revendications**

1. Appareil de traitement d'image possédant un moyen (24) de réduction d'image qui sert à réduire des données d'image mises sous forme binaire de M pixels par ligne dans une première direction et de N lignes dans une deuxième direction en des données d'image mises sous forme binaire de m pixels par ligne dans la première direction et de n lignes dans la deuxième direction, où M > m et N > n, ledit appareil comprenant :

   un moyen de désignation (30, 32) servant à désigner des positions de pixels de troncation dans chaque ligne des données d'image mises sous forme binaire et des positions de lignes de troncation dans les données d'image mises sous forme binaire, selon un taux de réduction d'image, et

   un moyen de troncation (34) servant à éliminer des pixels de chaque ligne aux positions de pixels de troncation désignées et à éliminer des lignes aux positions de lignes de troncation désignées, caractérisé en ce que le moyen de désignation est conçu pour décaler les positions de pixels de troncation entre lignes adjacentes selon une séquence prédéterminée.

2. Appareil de traitement d'image selon la revendication 1, comprenant en outre un moyen de conversion (52, 54) servant à convertir une image de façon à la faire passer de la forme de données d'image à plusieurs valeurs par pixel à la forme de données d'image mises sous forme binaire par pixel, avec M pixels par ligne dans la première direction et N lignes dans la deuxième direction.

3. Appareil de traitement d'image selon la revendication 1 ou 2, comprenant en outre un moyen de décision (26) servant à décider de la valeur du taux de réduction d'image en fonction des tailles, ou formats, d'image des données d'image mises sous forme binaire avant et après la troncation.

4. Appareil de traitement d'image selon l'une quelconque des revendications 1 à 3, où ledit moyen de désignation comprend :

   une mémoire (90), fonctionnellement connectée audit moyen de troncation (34), qui mémorise une configuration de troncation afin de commander la troncation de chaque ligne à réduire par ledit moyen de troncation,

   un moyen de lecture (26, 92, 100) servant à lire la configuration de troncation dans ladite mémoire en fonction du taux de réduction d'image.

5. Appareil de traitement d'image selon la revendication 4, où ladite mémoire (90) mémorise une configuration de troncation pour J lignes, J étant inférieur à N, et

   où ledit moyen de lecture (26, 92, 100) lit à répétition la configuration de troncation pour chaque nouveau groupe de J lignes.

6. Appareil de traitement d'image selon la revendication 5, où ledit moyen de lecture (26, 92, 100) fait une pause dans la lecture de la configuration de troncation lorsque ledit moyen de désignation (30, 32) désigne une position de ligne de troncation.

7. Appareil de traitement d'image selon l'une quelconque des revendications 1 à 6, comprenant en outre :

   un moyen de sortie (14) servant à délivrer les données de pixels tronquées qui sont produites par ledit moyen de troncation.

8. Appareil de traitement d'image selon l'une quelconque des revendications 1 à 7, où ledit moyen de troncation (34) est conçu pour supprimer par troncation des lignes en écrasant une ligne adjacente pour chacune des lignes à supprimer par troncation.

9. Appareil de traitement d'image selon l'une quelconque des revendications 1 à 8, comprenant en outre un moyen (10) de lecture de document servant à lire une feuille d'un document afin de produire des données de pixels mises sous forme binaire ayant M pixels dans la première direction et N lignes dans la deuxième direction.

10. Appareil de traitement d'image selon la revendication 9, où ledit moyen de lecture de document (10) comprend un moyen de conversion (52, 54) servant à convertir une image en la faisant passer de la forme données d'image à plusieurs valeurs par pixel à la forme données d'image mises sous forme binaire par pixel, avec M pixels dans la première direction et N lignes dans la deuxième direction.

**11.** Appareil de traitement d'image selon l'une quelconque des revendications 1 à 10, comprenant en outre une mémoire (20), fonctionnellement connectée audit moyen de troncation (34), afin de mémoriser des données de pixels mises sous forme binaire ayant M pixels par ligne dans la première direction et N lignes dans la deuxième direction.

**12.** Appareil de traitement d'image selon l'une quelconque des revendications 1 à 11, comprenant en outre un moyen (26) servant à fournir le taux de réduction d'image audit moyen de désignation (24).

**13.** Appareil de traitement d'image selon l'une quelconque des revendication 1 à 12, comprenant en outre un moyen d'émission (14, 16) servant à émettre les données d'image réduites à destination d'un autre appareil de traitement d'image.

**14.** Appareil de traitement d'image selon l'une quelconque des revendications 1 à 12, où ledit appareil peut être connecté à un autre appareil de traitement d'image, et comprend en outre :

un moyen d'émission (14, 16) servant à émettre les données d'image mises sous forme binaire réduites à destination de l'autre appareil de traitement d'image ; et

un moyen de réception (14) servant à recevoir des données d'image mises sous forme binaire traitées de la part de l'autre appareil de traitement d'image.

**15.** Appareil de traitement selon la revendication 14,

où ledit moyen de réception (14) est destiné à recevoir en outre un format de document de sortie de la part de l'autre appareil de traitement d'image ;

où ledit moyen de lecture de document (10) est en outre conçu pour produire un format de document d'entrée,

où ledit moyen de désignation (30, 32) possède un moyen servant à mémoriser des groupes de configurations de pixels pouvant être sélectionnés en fonction du taux de réduction d'image, et

où ledit appareil de traitement d'image comprend en outre un moyen servant à calculer le taux de réduction d'image à partir des formats de document d'entrée et de sortie.

**16.** Procédé de traitement d'image comprenant les opérations suivantes :

(a) fournir des données de pixels mises sous forme binaire ayant M pixels par ligne dans une première direction et N lignes dans une deuxième direction ;

(b) désigner des position de pixels de troncation dans chaque ligne de données de pixels et des positions de lignes de troncation en fonction d'un taux de réduction d'image ;

(c) tronquer les données de pixels mises sous forme binaire qui sont fournies dans l'opération (a) afin de réduire celles-ci de M pixels par ligne et N lignes à des données de pixels mises sous forme binaire tronquées ayant m pixels par ligne dans la première direction et n lignes dans la deuxième direction en fonction des positions de pixels de troncation et des positions de lignes de troncation, où M > m et N > n ; et

(d) délivrer les données de pixels mises sous forme binaire tronquées qui sont obtenues en résultat de l'opération (c) ;

caractérisé en ce que la désignation de positions de troncation à l'opération (b) est faite de façon à provoquer un décalage des positions de pixels de troncation entre lignes adjacentes selon une séquence prédéterminée.

**17.** Procédé de traitement d'image selon la revendication 16, où la troncation des lignes s'effectue par écrasement d'une ligne adjacente pour chacune des lignes devant être supprimées dans la troncation.

**18.** Procédé de traitement d'image selon l'une quelconque des revendications 16 et 17, comprenant en outre les opérations suivantes :

incrémenter une ligne de sortie des données de pixels mises sous forme binaire tronquées correspondant à une ligne d'entrée des données de pixels mises sous forme binaire, et

interdire l'incrémentation de ladite ligne de sortie lorsque ladite désignation effectuée à l'opération (b) indique que la ligne d'entrée correspondante doit être supprimée dans la troncation, les pixels présents sur la ligne d'entrée étant écrits sur la ligne de sortie qui correspond à une ligne d'entrée immédiatement précédente.

# FIG. I

EP 0 448 470 B1

FIG. 2

EP 0 448 470 B1

# FIG. 3

TO IMAGE MEMORY 20

26

5

MAIN CONTROL UNIT

PRINTING CONTROLLER — 60

SENSOR
SENSOR

62

PRINTING MECHANISM

74
66
64
68
78
76
70
80a
82a
80b
72
82b

# FIG. 4

FROM MAIN CONTROL UNIT 26

ADDRESS GENERATING CIRCUIT ~92

ROM ~90

94~ REG

96~ PARALLEL-SERIAL CONVERTER

98~ BUFFER

SUB-SCANNING CURTAILMENT POSITION SETTING CIRCUIT ~100

120 ~ FROM MAIN CONTROL UNIT 26 ~34

FROM IMAGE MEMORY 20

BUFFER
102

104~ GATE CCT.

BUFFER ~106

118 ~ FROM MAIN CONTROL UNIT 26

SERIAL-PARALLEL CONVERTER
108

116 ~ WRITING ADDRESS GENERATING CIRCUIT

REG ~110

ADDR REG
114

RAM ~112

TO DATA COMPRESSION/ DECOMPRESSION UNIT

30

32

EP 0 448 470 B1

# FIG. 5A

# FIG. 5B

# FIG. 5C

FIG. 6

# FIG. 7

MAIN SCANNING DIRECTION →

EP 0 448 470 B1

# FIG. 8

MAIN SCANNING DIRECTION →

EP 0 448 470 B1